# EUROPEAN PATENT SPECIFICATION

(11) **EP 4 073 772 B1**
(45) Date of publication and mention of the grant of the patent: **01.10.2025**
(21) Application number: 20820901.5
(22) Date of filing: 07.12.2020
(51) Int. Cl.: G08B 13/14, G06F 1/16, G06F 1/26, H02J 7/00, G08B 29/04

(54) **MODULAR SYSTEM COMPRISING A PERIPHERAL FOR AN ALARM SYSTEM AND A PLURALITY OF DIFFERENT POWER-PACKS FOR THE PERIPHERAL**
MODULARES SYSTEM EINES PERIPHEREN GERÄT FÜR EIN ALARMSYSTEM UND EINE PLURALITÄT VERSCHIEDENER ENERGIEPAKETE FÜR DAS PERIPHERES GERÄT BESTEHT
SYSTÈME MODULAIRE COMPRENANT UN APPAREIL PÉRIPHÉRIQUE POUR UN SYSTÈME D'ALARME ET UNE PLURALITÉ DE DIFFÉRENTS BLOCS D'ALIMENTATION POUR LE PÉRIPHÉRIQUE

(30) Priority: 10.12.2019 DE 102019133815
(43) Date of publication of application: 19.10.2022
(73) Proprietor: Verisure Sàrl, 1290 Versoix, Geneva (CH)
(72) Inventor: HACKETT, Nicholas J., 1290 Versoix, Geneva (CH); FILINESI, Rinaldo, 1290 Versoix, Geneva (CH); ZIELINSKI, Marcin, 1290 Versoix, Geneva (CH); BUTCHER, Dean Anthony, 1290 Versoix, Geneva (CH)
(74) Representative: Dennemeyer & Associates S.A.
(86) International application number: PCT/EP2020/084912
(87) International publication number: WO 2021/116028

(56) References cited:
- TW-A- 201 412 004
- US-A1- 2007 090 796
- US-A1- 2014 207 124
- US-A1- 2015 249 353

## Description

The invention relates to peripherals which are used in an alarm system installation.

The peripherals are part of an alarm installation which is used for protecting a building. The term "building" here refers to small businesses and homes. These can be houses or flats within a house.

The alarm system installation typically comprises a central unit and one or more peripherals. The central unit is typically mains-powered and serves for external communication, e.g. for sending an alarm call to an operation center. The peripherals communicate with the central unit and can, amongst other things, be sensors, cameras or communication interfaces via which a user can communicate with the central unit, e.g. to arm or disarm the alarm system installation.

For one and the same peripheral, there can be different use cases. Assuming that the peripheral is a camera, it can be used within a building to capture images or videos when activated, the camera can be installed outdoors and capture images or videos when activated, or it can be installed as a surveillance camera which is continuously active. Such different use cases require different power options.

TW 201 412 004 A discloses an uninterruptible power source converter which has a first power source set for providing a first DC voltage, a second power source set for providing a second DC voltage, and a DC/DC converter having an input end and an output end. The output end is used to provide a DC output voltage.

US 2007/090796 A1 discloses a power adapter for powering battery-operated power tools using electricity from a standard AC electrical outlet. The battery cartridge includes a housing which contains the battery cells and electrical connections for electrically connecting the battery cartridge to the power tool.

The object of the invention is to provide a peripheral which addresses the above need. The objective technical problem to be solved may be considered to consist in overcoming or at least reducing the disadvantages according to the prior art. The problem is solved by the subject matter of the independent claim 1. The peripheral is suitable for use in an alarm installation for protecting a home or small business, the peripheral comprising a removable power-pack, a rechargeable battery and battery charging electronics, wherein the battery and electronics are comprised in the removable power-pack. In some embodiments the peripheral is a wireless camera.

The invention is based on the concept of using a peripheral which does not have any energy source but is provided with an accommodation for receiving a power-pack. This allows combining the peripheral with a power-pack which is suitable for the particular use case. The peripheral may be used with a battery-based power pack. Such a battery-based power pack may use a non-rechargeable battery or batteries (or expressed differently a single-charge chemistry) such as alkaline batteries. This may be a suitable solution if the peripheral is used indoors and is not being activated frequently. If the same peripheral is used outdoors, or in a colder environment or is being activated frequently, a rechargeable battery or batteries (or expressed differently a multiple-charge chemistry) may instead be used, for example a lithium batteries. A rechargeable power pack may include circuitry and connections allowing it to interface with an external, detachable charger such as a solar charger or a mains charger. Alternatively, the peripheral may be used with a mains-powered power-pack so that "unlimited" electrical energy is available. This may be particularly advantageous where the peripheral is continuously activated, or activated for long periods at a time, as might be the case for a surveillance camera. In such a use case the mains-powered power-pack may additionally be supplemented with a battery pack, preferably a rechargeable battery pack, to power the peripheral during periods when the mains-power is not available.

The peripheral as such is the same for each use case so that fewer individual versions of one and the same device have to be manufactured, resulting in cost savings. By locating all of the power functionality in the individual power-packs, the cost of the peripheral itself, that is to say the peripheral body not including the power-packs, may be reduced.

It will be appreciated that in certain use cases charging circuitry is not required. Therefore, for this use case the overall cost of the peripheral and required battery pack may be reduced by not including such elements in the peripheral body. These costs are pushed to those power-packs which correspond to use cases which require such elements.

In this way, with all the circuitry required to support the power function located in the power-pack, the peripheral may only "see" the power/ground together with some indication of the type of power supply used (as is discussed below).

Various types of circuitry for supporting the power function of a given power-pack may be used for different use cases. In one example, a coulomb counter may be used to determine power expenditure. In some embodiments the coulomb counter may be supplemented by a thermistor to allow for the effects of temperature on remaining battery life to be taken into account. In a second example, charger and input protection functionality may be provided. In a third example, charger, input protection and regulator functionality may be provided. In a fourth example, current and/or voltage regulator functionality together with over voltage protection and/or over current protection functionality is provided. The coulomb counter and thermistor functionality of the first example may also be combined with the second, third and fourth examples.

Each power-pack comprises the required circuitry for supporting the power function of that power-pack. In some embodiments each power-pack that comprises a rechargeable battery also comprises electronics for regulating the charging of the rechargeable battery. In some embodiments, a battery tray is used which allows the user to slide out a tray from the peripheral that contains the power-pack. This may include the batteries or the battery pack. For use cases where an always-powered (e.g. 220V) device is required, a pack of the same size as the tray that could contain a multiple-charge chemistry battery pack, integrated charger and an interface to the external supply could instead by used. Such an always-powered power-pack could be mounted on a tray as described above or used with such a tray.

Each power-pack has an identifier or identification. The identifier makes available to the peripheral the information which is required by the peripheral to determine which type of power-pack is being used. This allows the peripheral to determine the remaining time of operation under battery power and to undertake performance related energy management activities. For doing so, it is necessary to know which power-pack is inserted, and whether the power-pack is being recharged or not. For example, if the MCN of the peripheral, that may be detachably connected to a charger, receives information from the power-pack that a charger is connected, then the peripheral may be configured to act like a mains powered device. Alternatively if the connection to the charger is removed then battery saving behaviors may be initiated. For example, where the peripheral is a camera it may take and transmit to the central unit lower resolution images than would be the case when behaving as a mains powered device.

The identifier can be implemented as at least one ID pin which cooperates with the peripheral. In one embodiment, the ID pin is mechanically coded. This allows a user to provide to the peripheral the information if alkaline batteries or rechargeable batteries are provided in the battery tray. According to an alternative embodiment, the identification means is at least one electrical contact, for example an earth. In other embodiments an EEPROM may be used to allow the type of power-pack to be identified. It is also possible that the identification means comprises a data bus such as i2c thereby allowing the type of the power-pack installed as well as other information to be made available to the peripheral.

The peripheral may comprise a tamper switch. The tamper switch allows a tamper signal to be sent from the peripheral to the central unit in the event that there is an unauthorized attempt to remove the power-pack. Preferably the tamper is detected by the peripheral, as opposed to through the battery interface. In other embodiments the tamper is detected through the battery interface.

The tamper switch cooperates with the power-pack. Accordingly, a tamper signal is sent when the power-pack is removed or partially removed from the peripheral without there being a prior authorization signal.

It is also possible that a latching arrangement is provided for connecting the power-pack to the peripheral, the tamper switch cooperating with the latching arrangement. The tamper switch allows a tamper signal to be sent when there is an unauthorized attempt to unlatch the power-pack.

The mains-powered power-pack can comprise a rechargeable battery so as to provide electrical power to the peripheral for some time after a mains supply has been cut off or disconnected.

In different power-packs different levels of communication are used between the peripheral itself and the different power-packs. In a simple non-rechargeable battery pack no communication may be needed. The peripheral MCU may be adapted to read the voltage of the power-pack and, based on the profile loaded into its code, may estimate the remaining battery life. In use cases employing a power-pack comprising a rechargeable battery pack and an external charging connection, communication is employed between the peripheral and the power-pack to inform the MCU whether at any given time it is functioning on power from the charging connection or battery power, whether the battery is charging or not, instantaneous batter level etc. Where such communication is required, it may be combined with battery pack identification to minimize the number of pins are required for the power interface.

Preferably the power-pack, when installed in the peripheral, forms part of the outer housing of the device.

The peripheral can in particular be a camera which captures images or videos when activated.

The invention will now be described with reference to the enclosed drawings. In the drawings,
Figure 1 schematically shows an alarm system installation with a peripheral,
Figure 2 schematically shows a top view of the peripheral,
Figure 3 shows the peripheral of Figure 2 with three different types of power-packs,
Figure 4 shows part of the peripheral of Figure 3 provided with a first type of power-pack installed,
Figure 5 shows a first step of removal of the power-pack from the peripheral,
Figure 6 shows a second step of removal of the power-pack from the peripheral,
Figure 7 shows part of the peripheral of Figure 3 with a different type of power-pack, and
Figure 8 shows the peripheral of Figure 7 with the power-pack partly removed.

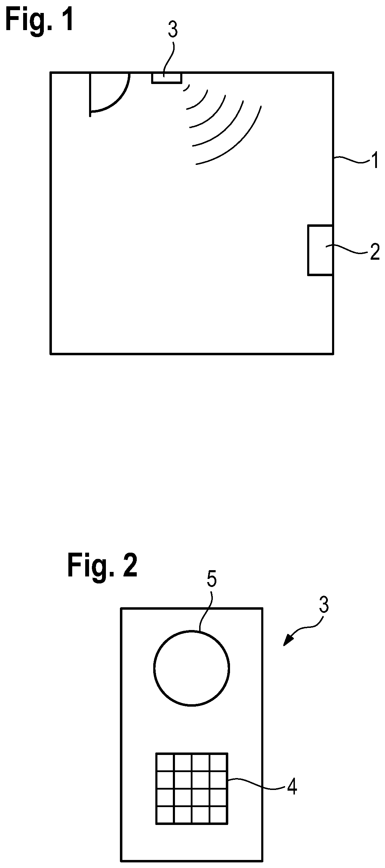

Figure 1 shows a home alarm system installation in a building 1 . The home alarm system installation comprises a central unit 2 which is typically mains-powered and serves for external communication, e.g. for sending an alarm call to an operation center. Other functionality can be implemented as well.

The alarm system installation further comprises one or more peripherals. The peripherals communicate with the central unit and can be provided with electrical energy in different manners, depending from the use case.

One example of such peripheral is a camera 3 which can capture sound via a microphone 4 and images and/or videos via a lens 5.

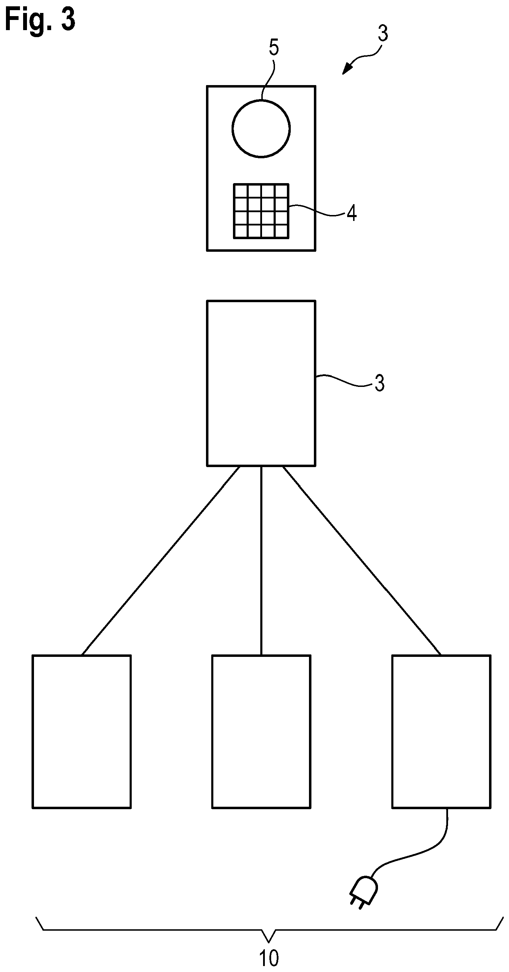

The electrical energy for peripheral 3 is provided by a schematically shown power-pack 10 which is received within an accommodation within peripheral 3. As is shown in Figure 3, different types of power-packs are available, which all can be installed, depending on the use case, in one and the same peripheral.

As an example, power-pack 10 can be a battery tray 10A which can receive alkaline batteries or rechargeable batteries.

As a further example, power-pack 10 can be a rechargeable battery pack to be installed in the peripheral 3.

As a further example, power-pack 10 can be a mains-powered power-pack 10C which potentially also comprises a rechargeable battery.

All different types of power-packs have (at least approximately) the same dimensions and an identical power interface, the power interface of the power-packs 10 cooperating with contacts at the peripheral for providing electric energy.

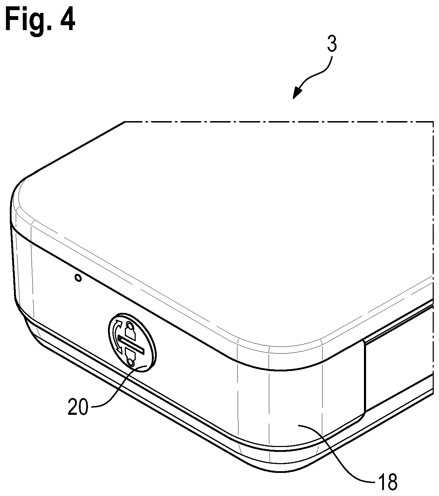

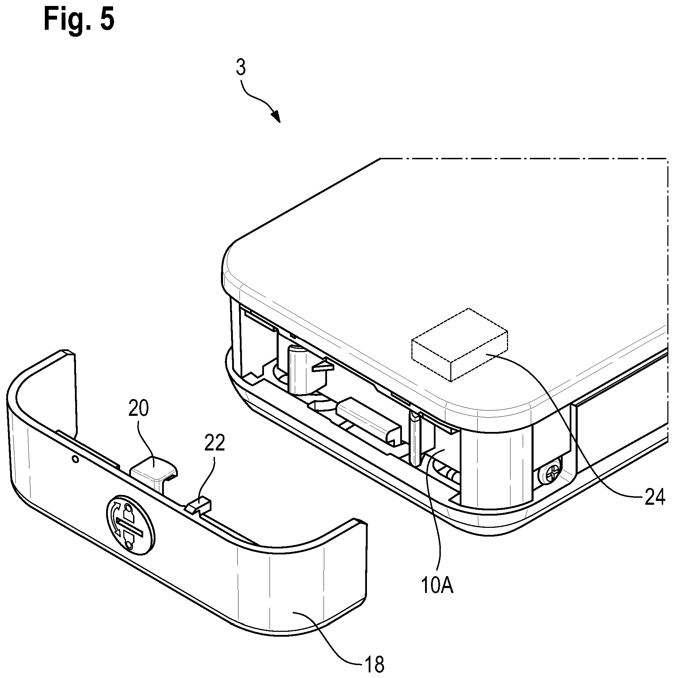

In Figures 4, 5 and 6, peripheral 3 is shown with a power-pack 10A which is a battery tray.

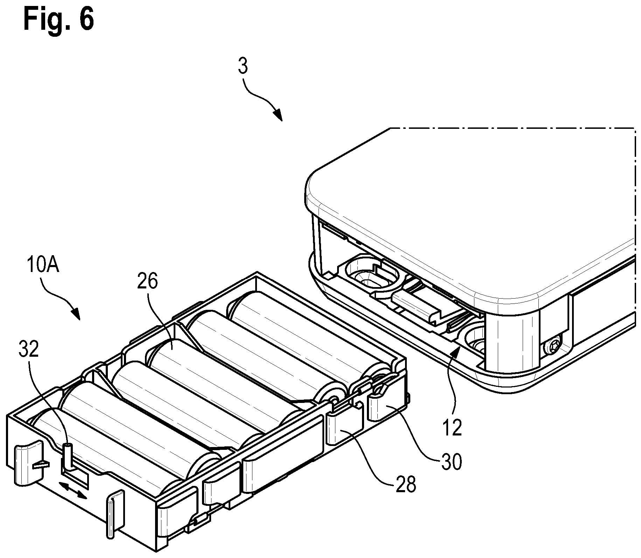

Battery tray 10A is received within an accommodation 12 (see in particular Figure 6), with accommodation 12 being closed by a cover 18.

Cover 18 has a locking lever 20 for reliably connecting cover 18 to the housing of peripheral 3, or closing the cover 18 in relation to the housing of peripheral 3. At cover 18, a tamper tab 22 is arranged which cooperates with a tamper switch 24 provided at the peripheral. Should the tamper tab be moved in relation to the tamper switch 24, which would occur for example if the cover 18 was removed or partially withdrawn from the peripheral, without there having been a prior communication to the peripheral which authorizes removal of cover 18, a tamper signal is sent from the peripheral to the central unit. Alternatively, the tamper could be triggered where the tamper tab is rotated in relation to the tamper switch 24.

Battery tray 10A can receive a plurality of alkaline batteries 26, for example of size AA. As an alternative, rechargeable batteries of the same size can be used.

Visible in Figure 6 is further a power interface consisting of a power contact 28 and a ground contact 30, which are provided for transmitting electric power to peripheral 3.

At battery tray 10A, an identification means 32 is provided. It is here formed as a mechanical pin which can be displaced between a first and a second position. The position to the left (visible in Figure 6) indicates that alkaline batteries are used. If rechargeable batteries are used, identification means 32 is moved to the right. This allows peripheral 3 to understand, via an appropriate sensor, which type of batteries is present and to correspondingly calculate the correct remaining power supply.

If as an alternative to battery tray 10A, a rechargeable battery pack 10B is used as power-pack, the power-pack as such has the same dimensions as battery tray 10A and has the same power interface. It is the entire power-pack which is to be placed in a charger for recharging, instead of removing the individual batteries from the battery tray.

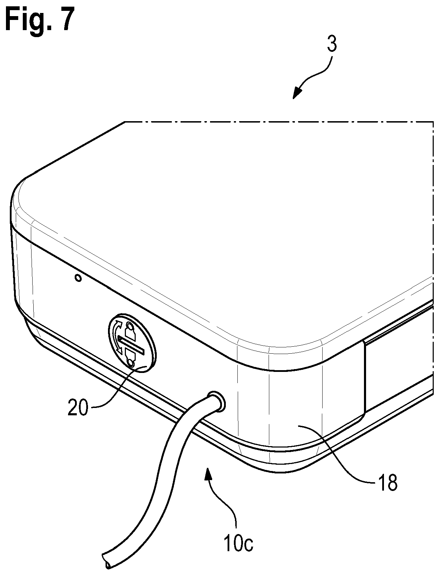

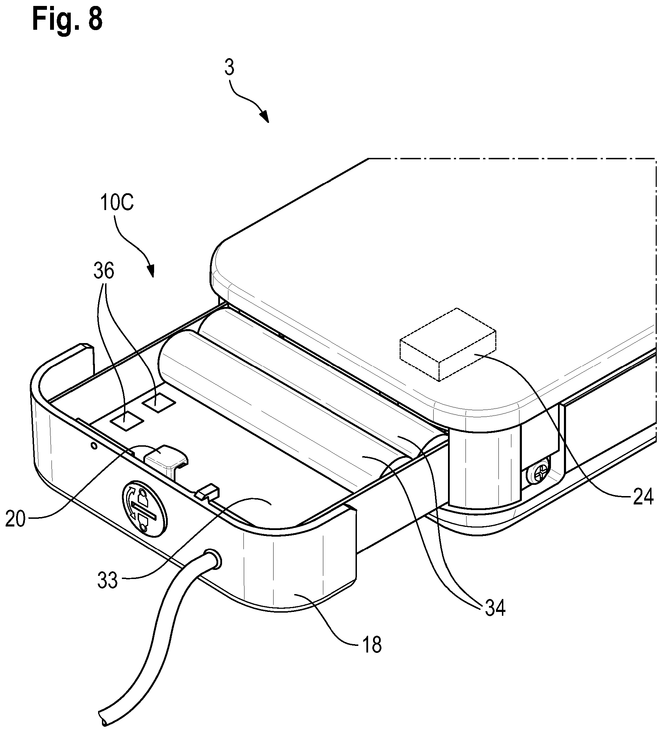

In Figures 7 and 8, a power-pack 10C is used which is a mains-powered energy supply module. It is also latched to the housing of the peripheral via locking lever 20.

A charger 33 is integrated into power-pack 10C. Instead of the cable which is shown here, a socket for connecting a cable can be used as an alternative.

Power-pack 10C is here provided with some rechargeable batteries 34 which provide some backup energy to peripheral 3 in case the mains supply is interrupted for some time. In other embodiments such a mains-powered energy supply module comprises no rechargeable batteries.

Power-pack 10C is provided with two electrical contacts 36 which form an identification means, in particular an interface for a data bus such as i2c.

## Claims

1. A peripheral (3) to be used as part of a modular system in an alarm system installation, the peripheral (3) having an accommodation (12) adapted to receive one of a first-type power-pack and further adapted to receive in place of the first-type power-pack a second-type power pack, wherein at least one of the first-type or the second-type power pack comprises a battery, the peripheral (3) further comprising an electrical interface adapted to connect with each of the first-type power-pack and the second-type power-pack when installed in the peripheral, the peripheral (3) being **characterized in that** it further comprises means (32; 36) configured to determine whether a connected power-pack is a first-type or a second-type power-pack, the peripheral (3) being configured to determine a remaining time of operation under battery power depending on the determination of the power-pack connected.

2. The peripheral (3) of claim 1, wherein the peripheral (3) is suitable for use in an alarm installation for protecting a home or small business, the peripheral (3) comprising a removable power-pack, a rechargeable battery and battery charging electronics, wherein the battery and electronics are comprised in the removable power-pack.

3. The peripheral (3) according to claim 1 or 2, wherein the peripheral (3) is a wireless camera.

4. A modular system for an alarm system installation comprising a peripheral (3) according to any one of the claims 1 to 3, the peripheral (3) being an alarm peripheral (3) and the modular system also comprising first-type and second-type power-packs,
the modular system being **characterized in that** the first-type power-pack being a battery power-pack and the second-type power-pack being a mains-powered power-pack (10C), wherein for each power-pack the circuitry required to support a power function for a specific power-pack is located with that respective power-pack.

5. The modular system of claim 4, wherein the first-type and the-second type power-packs (10) have the same dimensions and identical power interfaces (28, 30),

6. The modular system of claim 4, wherein the power interface comprises electrical contacts (28, 30) for ground and power, and an identification means (32; 36) for determining whether a connected power-pack is a first-type or a second-type power-pack.

7. The modular system of claim 6, wherein the identification means is implemented as at least one ID pin (32).

8. The modular system of claim 7, wherein the ID pin (32) is mechanically coded.

9. The modular system of claim 6, wherein the identification means is at least one GPIO contact.

10. The modular system of claim 6, wherein the identification means (36) comprises a data bus such as i2c.

11. The modular system according to any of the claims 4 to 10, wherein the peripheral (3) comprises a tamper switch (24).

12. The modular system of claim 11, wherein the tamper switch (24) cooperates with the power-pack (10) such that a tamper signal is sent when the power-pack is removed or partially removed from the peripheral (3) without there being a prior authorization signal.

13. The modular system of claim 11 or 12, wherein a latching arrangement (20) is provided for connecting the power-pack (10) to the peripheral (3), the tamper switch (24) cooperating with the latching arrangement (20) such that a tamper signal is sent when an unauthorized attempt to unlatch the power-pack occurs.

14. The modular system of any of the claims 4 to 13, wherein the mains-powered power-pack (10C) comprises a rechargeable battery (34).

15. The modular system of any of the claims 4 to 14, wherein the peripheral (3) is a camera (3).

16. The modular system of any of the claims 4 to 15, wherein the first-type power-pack being is an alkaline battery pack or a lithium battery pack.

17. The modular system of any of the claims 4 to 16, wherein the first-type power-pack being is a rechargeable battery pack.

18. The modular system of claim 17, wherein the rechargeable battery pack is adapted to be connected to a solar panel.

19. The modular system of any of the claims 4 to 18, wherein the second-type power-pack further comprises a rechargeable battery.

## Patentansprüche

1. Peripheriegerät (3) zum Verwenden als Teil eines modularen Systems in einer Alarmsysteminstallation, wobei das Peripheriegerät (3) eine Aufnahmeeinrichtung (12) aufweist, die dazu angepasst ist, eines von einem Netzteil eines ersten Typs aufzunehmen und ferner dazu angepasst ist, anstelle des Netzteil eines ersten Typs ein Netzteil eines zweiten Typs aufzunehmen, wobei mindestens eines von dem Netzteil eines ersten Typs oder eines zweiten Typs eine Batterie umfasst, wobei das Peripheriegerät (3) ferner
eine elektrische Schnittstelle umfasst, die dazu angepasst ist, sich mit jedem von dem Netzteil eines ersten Typs und dem Netzteil eines zweiten Typs zu verbinden, wenn dieses in dem Peripheriegerät installiert ist, wobei das Peripheriegerät (3) **dadurch gekennzeichnet ist, dass** es ferner Mittel (32, 36) umfasst, die dazu konfiguriert sind, zu bestimmen, ob ein verbundenes Netzteil ein Netzteil eines ersten Typs oder eines zweiten Typs ist, wobei das Peripheriegerät (3) dazu konfiguriert ist, eine verbleibende Betriebszeit unter Batteriestrom abhängig von der Bestimmung des verbundenen Netzteils zu bestimmen.

2. Peripheriegerät (3) nach Anspruch 1, wobei das Peripheriegerät (3) für eine Verwendung in einer Alarminstallation zum Schützen eines Wohnhauses oder eines kleinen Unternehmens geeignet ist, wobei das Peripheriegerät (3) ein herausnehmbares Netzteil, eine wiederaufladbare Batterie und Batterieladeelektronik umfasst, wobei die Batterie und die Elektronik in dem herausnehmbaren Netzteil umfasst sind.

3. Peripheriegerät (3) nach Anspruch 1 oder 2, wobei das Peripheriegerät (3) eine drahtlose Kamera ist.

4. Modulares System für eine Alarmsysteminstallation, umfassend ein Peripheriegerät (3) nach einem der Ansprüche 1 bis 3, wobei das Peripheriegerät (3) ein Alarmperipheriegerät (3) ist und das modulare System auch Netzteile eines ersten Typs und eines zweiten Typs umfasst,
wobei das modulare System **dadurch gekennzeichnet ist, dass** das Netzteil eines ersten Typs ein Batterienetzteil ist und das Netzteil eines zweiten Typs ein mit Netzstrom versorgtes Netzteil (10C) ist, wobei sich für jedes Netzteil die zur Unterstützung einer Stromfunktion für ein spezifisches Netzteil erforderliche Schaltung bei dem jeweiligen Netzteil befindet.

5. Modulares System nach Anspruch 4, wobei die Netzteile eines ersten Typs und eines zweiten Typs (10) die gleichen Abmessungen und identische Stromschnittstellen (28, 30) aufweisen.

6. Modulares System nach Anspruch 4, wobei die Stromschnittstelle elektrische Kontakte (28, 30) für Erdung und Strom und Identifikationsmittel (32, 36) zum Bestimmen, ob ein verbundenes Netzteil ein Netzteil eines ersten Typs oder eines zweiten Typs ist, umfasst.

7. Modulares System nach Anspruch 6, wobei das Identifikationsmittel mindestens ein ID-Pin (32) ist.

8. Modulares System nach Anspruch 7, wobei der ID-Pin (32) mechanisch kodiert ist.

9. Modulares System nach Anspruch 6, wobei das Identifikationsmittel mindestens ein GPIO-Kontakt ist.

10. Modulares System nach Anspruch 6, wobei das Identifikationsmittel (36) einen Datenbus wie i2c umfasst.

11. Modulares System nach einem der Ansprüche 4 bis 10, wobei das Peripheriegerät (3) einen Manipulationsschalter (24) umfasst.

12. Modulares System nach Anspruch 11, wobei der Manipulationsschalter (24) mit dem Netzteil (10) so kooperiert, dass ein Manipulationssignal gesendet wird, wenn das Netzteil aus dem Peripheriegerät (3) herausgenommen oder teilweise herausgenommen wird, ohne dass vorher ein Autorisierungssignal erfolgt ist.

13. Modulares System nach Anspruch 11 oder 12, wobei eine Verriegelungsanordnung (20) zum Verbinden des Netzteils (10) mit dem Peripheriegerät (3) bereitgestellt ist, wobei der Manipulationsschalter (24) mit der Verriegelungsanordnung (20) so kooperiert, dass ein Manipulationssignal gesendet wird, wenn ein unautorisierter Versuch zum Entriegeln des Netzteils auftritt.

14. Modulares System nach einem der Ansprüche 4 bis 13, wobei das mit Netzstrom versorgte Netzteil (10C) eine wiederaufladbare Batterie (34) umfasst.

15. Modulares System nach einem der Ansprüche 4 bis 14, wobei das Peripheriegerät (3) eine Kamera (3) ist.

16. Modulares System nach einem der Ansprüche 4 bis 15, wobei das Netzteil eines ersten Typs ein Alkali-Akku oder ein Lithium-Akku ist.

17. Modulares System nach einem der Ansprüche 4 bis 16, wobei das Netzteil eines ersten Typs ein wiederaufladbarer Akku ist.

18. Modulares System nach Anspruch 17, wobei der wiederaufladbare Akku dazu angepasst ist, mit einem Solarpaneel verbunden zu sein.

19. Modulares System nach einem der Ansprüche 4 bis 18, wobei das Netzteil eines zweiten Typs ferner eine wiederaufladbare Batterie umfasst.

## Revendications

1. Périphérique (3) destiné à être utilisé dans le cadre d'un système modulaire d'une installation de système d'alarme, le périphérique (3) présentant un logement (12) adapté pour recevoir l'un d'un bloc d'alimentation de premier type et adapté en outre pour recevoir, à la place du bloc d'alimentation de premier type, un bloc d'alimentation de deuxième type, dans lequel au moins l'un du bloc d'alimentation de premier type ou du bloc d'alimentation de deuxième type comprend une batterie, le périphérique (3) comprenant
en outre une interface électrique adaptée pour se connecter à chacun du bloc d'alimentation de premier type et du bloc d'alimentation de deuxième type lorsqu'ils sont installés dans le périphérique, le périphérique (3) étant **caractérisé en ce qu'**il comprend en outre des moyens (32 ; 36) configurés pour déterminer si un bloc d'alimentation connecté est un bloc d'alimentation de premier type ou un bloc d'alimentation de deuxième type, le périphérique (3) étant configuré pour déterminer un temps de fonctionnement restant sous alimentation par batterie en fonction de la détermination du bloc d'alimentation connecté.

2. Périphérique (3) de la revendication 1, dans lequel le périphérique (3) convient à une utilisation dans une installation d'alarme destinée à protéger un domicile ou une petite entreprise, le périphérique (3) comprenant un bloc d'alimentation amovible, une batterie rechargeable et une électronique de charge de batterie, dans lequel la batterie et l'électronique sont comprises dans le bloc d'alimentation amovible.

3. Périphérique (3) selon la revendication 1 ou 2, dans lequel le périphérique (3) est une caméra sans fil.

4. Système modulaire pour une installation de système d'alarme comprenant un périphérique (3) selon l'une quelconque des revendications 1 à 3, le périphérique (3) étant un périphérique d'alarme (3) et le système modulaire comprenant également des blocs d'alimentation de premier type et de deuxième type,
le système modulaire étant **caractérisé en ce que** le bloc d'alimentation de premier type est un bloc d'alimentation à batterie et le bloc d'alimentation de deuxième type est un bloc d'alimentation sur secteur (10C), dans lequel, pour chaque bloc d'alimentation, le circuit nécessaire pour supporter une fonction d'alimentation pour un bloc d'alimentation spécifique est situé avec ce bloc d'alimentation respectif.

5. Système modulaire de la revendication 4, dans lequel les blocs d'alimentation de premier type et de deuxième type (10) présentent les mêmes dimensions et des interfaces d'alimentation identiques (28, 30).

6. Système modulaire de la revendication 4, dans lequel l'interface d'alimentation comprend des contacts électriques (28, 30) pour la masse et l'alimentation, ainsi que des moyens d'identification (32 ; 36) pour déterminer si un bloc d'alimentation connecté est un bloc d'alimentation de premier type ou un bloc d'alimentation de deuxième type.

7. Système modulaire de la revendication 6, dans lequel les moyens d'identification sont mis en œuvre sous la forme d'au moins une broche d'identification (ID pin) (32).

8. Système modulaire de la revendication 7, dans lequel la broche d'identification (ID pin) (32) est codée mécaniquement.

9. Système modulaire de la revendication 6, dans lequel les moyens d'identification sont au moins un contact GPIO.

10. Système modulaire de la revendication 6, dans lequel les moyens d'identification (36) comprennent un bus de données tel que i2c.

11. Système modulaire de l'une quelconque des revendications 4 à 10, dans lequel le périphérique (3) comprend un interrupteur anti-sabotage (24).

12. Système modulaire de la revendication 11, dans lequel l'interrupteur anti-sabotage (24) coopère avec le bloc d'alimentation (10) de sorte qu'un signal de sabotage est envoyé lorsque le bloc d'alimentation est retiré ou partiellement retiré du périphérique (3) sans qu'il y ait eu un signal d'autorisation préalable.

13. Système modulaire de la revendication 11 ou 12, dans lequel un dispositif de verrouillage (20) est prévu pour connecter le bloc d'alimentation (10) au périphérique (3), l'interrupteur anti-sabotage (24) coopérant avec le dispositif de verrouillage (20) de sorte qu'un signal de sabotage est envoyé lorsqu'une tentative non autorisée de déverrouillage du bloc d'alimentation se produit.

14. Système modulaire de l'une quelconque des revendications 4 à 13, dans lequel le bloc d'alimentation sur secteur (10C) comprend une batterie rechargeable (34).

15. Système modulaire de l'une quelconque des revendications 4 à 14, dans lequel le périphérique (3) est une caméra (3).

16. Système modulaire de l'une quelconque des revendications 4 à 15, dans lequel le bloc d'alimentation de premier type est un bloc-batterie alcalin ou un bloc-batterie au lithium.

17. Système modulaire de l'une quelconque des revendications 4 à 16, dans lequel le bloc d'alimentation de premier type est un bloc-batterie rechargeable.

18. Système modulaire de la revendication 17, dans lequel le bloc-batterie rechargeable est adapté pour être connecté à un panneau solaire.

19. Système modulaire de l'une quelconque des revendications 4 à 18, dans lequel le bloc d'alimentation de deuxième type comprend en outre une batterie rechargeable.
